# EUROPÄISCHE PATENTANMELDUNG

(11) **EP 4 506 216 A1**
(43) Veröffentlichungstag der Anmeldung: **12.02.2025**
(21) Anmeldenummer: 24192371.3
(22) Anmeldetag: 01.08.2024
(51) Int. Cl.: B60T 13/74, F16C 35/067, F16H 57/021, F16H 57/023, F16H 57/025, F16H 57/08

(54) **LAGEREINHEIT SOWIE STELLANTRIEB**

(30) Priorität: 08.08.2023 DE 102023121042
(71) Anmelder: Oechsler AG, 91522 Ansbach (DE)
(72) Erfinder: ROESEL, Andreas, 90451 Nuernberg (DE); DETTENBERGER, Stefan, 91522 Ansbach (DE)
(74) Vertreter: Canzler & Bergmeier Patentanwälte Partnerschaft mbB

(57) **Zusammenfassung**

Die Erfindung betrifft eine Lagereinheit (2) für einen Motor (3) und wenigstens ein Getriebeelement (6, 7, 8, 9, 10, 11, 12, 13, 14, 15) eines Stellantriebs (1), mit wenigstens einem Fixierelement (16), mit dem der Motor (3) in einem Gehäuse (40) des Stellantriebs (1) fixierbar und/oder lagerbar ist, und mit wenigstens einem Hohlrad (15), mit dem das wenigstens eine Getriebeelement (6, 7, 8, 9, 10, 11, 12, 13, 14, 15) des Stellantriebs (1) aufnehmbar und/oder lagerbar ist, wobei das wenigstens eine Hohlrad (15) wenigstens einen Sicherungsabschnitt (17) umfasst, mit dem das Hohlrad (15) in dem Gehäuse (40) fixierbar und/oder drehfest lagerbar ist. Erfindungsgemäß umfasst die Lagereinheit (2) wenigstens eine Lagerachse (18, 19, 20), wobei das wenigstens eine Hohlrad (15) und das wenigstens eine Fixierelement (16) im bestimmungsgemäßen Gebrauch der Lagereinheit (2) über die wenigstens eine Lagerachse (18, 19, 20), insbesondere unmittelbar, verbunden sind. Des Weiteren betrifft die Erfindung einen Stellantrieb (1).

## Beschreibung

Die vorliegende Erfindung betrifft eine Lagereinheit für einen Motor und/oder wenigstens ein Getriebeelement eines Stellantriebs, mit wenigstens einem Fixierelement, mit dem der Motor in einem Gehäuse des Stellantriebs fixierbar und/oder lagerbar ist, und mit wenigstens einem Hohlrad, mit dem das wenigstens eine Getriebeelement des Stellantriebs aufnehmbar und/oder lagerbar ist, wobei das wenigstens eine Hohlrad wenigstens einen Sicherungsabschnitt umfasst, mit dem das Hohlrad in dem Gehäuse fixierbar und/oder drehfest lagerbar ist. Des Weiteren betrifft die Erfindung einen Stellantrieb, insbesondere für eine Fahrzeugkomponente, beispielsweise für eine elektronische Parkbremse.

Aus der DE 10 2019 131 607 A1 ist eine Baugruppe, insbesondere für einen Parkbremsaktuator bekannt. Der Parkbremsaktuator umfasst ein Gehäuse, in dem ein Elektromotor und ein durch den Elektromotor antreibbares Getriebe angeordnet sind. Ein Hohlrad weist mindestens eine Stützvorrichtung zur Abstützung in einem Gehäuse auf. Der Elektromotor ist mit einem ersten axialen Ende in eine Fixierplatte aufgenommen. Eine zusätzliche Stützplatte nimmt ein austauschbares Gegenrad des Getriebes auf, wobei sich die Fixierplatte des Elektromotors an der Stützplatte abstützt. Aufgrund dieser Anordnung kann es zu unerwünschten Bewegungen der Getriebebauteile kommen, wodurch der Verschleiß erhöht ist. Dadurch ist die Ausfallwahrscheinlichkeit des Stellantriebs bzw. des Parkbremsaktuators erhöht. Zudem kann der erhöhte Verschleiß den Zahneingriff der Getriebebauteile erhöhen, wodurch Störgeräuschen bzw. erhöhte Betriebsgeräusche folgen können.

Aufgabe der vorliegenden Erfindung ist es, die aus dem Stand der Technik bekannten Nachteile zu beseitigen.

Die Aufgabe wird gelöst durch eine Lagereinheit sowie einen Stellantrieb mit den Merkmalen der unabhängigen Patentansprüche.

Vorgeschlagen wird eine Lagereinheit für einen Motor und/oder wenigstens ein Getriebeelement eines Stellantriebs. Der Motor ist vorzugsweise ein Elektromotor. Das wenigstens eine Getriebeelement ist vorzugsweise ein Getrieberad, insbesondere eines Planetenradgetriebes und/oder eines Übersetzungsgetriebes des Stellantriebs. Das Getriebeelement kann beispielsweise wenigstens ein Antriebsritzel, wenigstens ein Übersetzungsrad, wenigstens ein Übersetzungsritzel, wenigstens ein Zwischenritzel, wenigstens ein Abtriebsrad, wenigstens ein Sonnenrad, wenigstens ein Planetenträger und/oder wenigstens ein Planetenrad sein.

Die Lagereinheit umfasst wenigstens ein Fixierelement, mit dem der Motor in einem Gehäuse des Stellantriebs fixierbar und/oder lagerbar ist. Zudem umfasst die Lagereinheit wenigstens ein Hohlrad. Mit dem Hohlrad ist vorzugsweise das wenigstens eine Getriebeelement des Stellantriebs, insbesondere eines Planetenradgetriebes und/oder eines Übersetzungsgetriebes des Stellantriebs, aufnehmbar und/oder lagerbar. Die Lagereinheit umfasst somit das wenigstens eine Fixierelement und das wenigstens eine Hohlrad. Das Fixierelement kann beispielsweise eine Fixierplatte sein. Zudem ist es vorstellbar, dass die Lagereinheit zwei Hohlräder aufweist, die eine Hohlradeinheit ausbilden.

Das wenigstens eine Hohlrad lagert und/oder nimmt im bestimmungsgemäßen Gebrauch des Stellantriebs zumindest ein Getriebeelement auf. So kann innerhalb des Hohlrads das wenigstens eine Abtriebsrad, das wenigstens eine Sonnenrad, der wenigstens eine Planetenträger und/oder das wenigstens eine Planetenrad aufgenommen und/oder angeordnet sein. Das wenigstens eine Hohlrad, das wenigstens eine Abtriebsrad, das wenigstens eine Sonnenrad, der wenigstens eine Planetenträger und/oder das wenigstens eine Planetenrad bilden vorzugsweise das Planetenradgetriebe aus.

Das wenigstens eine Antriebsritzel, das wenigstens eine Übersetzungsrad, das wenigstens eine Übersetzungsritzel und/oder das wenigstens eine Zwischenritzel ist vorzugsweise an dem wenigstens einen Hohlraum und/oder an dem wenigstens einen Fixierelement gelagert. Das wenigstens eine Antriebsritzel, das wenigstens eine Übersetzungsrad, das wenigstens eine Übersetzungsritzel und/oder das wenigstens eine Zwischenritzel bilden vorzugsweise das Übersetzungsgetriebe aus. Das wenigstens eine Antriebsritzel, das wenigstens eine Übersetzungsrad, das wenigstens eine Übersetzungsritzel und/oder das wenigstens eine Zwischenritzel ist vorzugsweise mit Hilfe des Fixierelements und/oder des Hohlrads gelagert.

Das wenigstens eine Hohlrad umfasst wenigstens einen Sicherungsabschnitt, mit dem das Hohlrad in dem Gehäuse fixierbar und/oder drehfest lagerbar ist. Der Sicherungsabschnitt ist vorzugsweise nockenförmig und/oder verzahnt ausgebildet. Der nockenförmige Sicherungsabschnitt umfasst eine Vielzahl an Nocken, die sich an einer Außenseite des Hohlrads radial nach außen vom Hohlrad wegerstrecken. Beispielsweise können die Nocken eine quaderförmige Grundform besitzen. Mit Hilfe wenigstens eines zum Sicherungsabschnitt korrespondierend ausgebildeten Stützabschnitts des Gehäuses ist das wenigstens eine Hohlrad im bestimmungsgemäßen Gebrauch der Lagereinheit in dem Stellantrieb fixiert bzw. drehfest gelagert und/oder aufgenommen. Der Stützabschnitt kann somit eine Vielzahl an Aufnahmetaschen umfassen, die korrespondierend zu den Nocken ausgebildet sind. Vorzugsweise kann das wenigstens eine Hohlrad entlang einer Axialrichtung des Stellantriebs bzw. des Motors, von dem Gehäuse getrennt werden.

Erfindungsgemäß umfasst die Lagereinheit wenigstens eine Lagerachse, wobei das wenigstens eine Hohlrad und das wenigstens eine Fixierelement im bestimmungsgemä-ßen Gebrauch der Lagereinheit über die wenigstens eine Lagerachse, insbesondere unmittelbar, verbunden sind. Die wenigstens eine Lagerachse stellt somit die Verbindung zwischen dem wenigstens einen Hohlrad und dem wenigstens einen Fixierelement bereit. Dadurch können die Toleranzen zwischen den einzelnen Getriebeelementen des Stellantriebs, insbesondere des Übersetzungsgetriebes und/oder des Planetenradgetriebes, möglichst gering gehalten werden.

Vorzugsweise sind das wenigstens eine Hohlrad und das wenigstens eine Fixierelement lösbar über die wenigstens eine Lagerachse miteinander verbunden. So kann beispielsweise das wenigstens eine Hohlrad und/oder das wenigstens eine Fixierelement ausgetauscht werden. Dies ist insbesondere zur einfacheren Anpassbarkeit des Stellantriebs an verschiedene Leistungs- und Größenklassen vorteilhaft. Zudem kann dadurch bei Verschleiß das wenigstens eine Hohlrad und/oder das wenigstens eine Fixierelement und/oder das wenigstens eine Getriebeelement sehr einfach ausgetauscht werden.

Zusätzlich oder alternativ kann die wenigstens eine Lagerachse wenigstens ein Getriebeelement, insbesondere ein Übersetzungsritzel und/oder ein Zwischenritzel lagern und/oder aufnehmen. So ist vorzugsweise das wenigstens eine Hohlrad, das wenigstens eine Fixierelement und das wenigstens eine Getriebeelement an der wenigstens einen Lagerachse, insbesondere unmittelbar, gelagert. Dadurch können die Toleranzen und/oder die Toleranzketten möglichst gering gehalten werden.

Die Lagereinheit ist vorzugsweise mehrteilig, insbesondere wenigstens zweiteilig, ausgebildet. Durch die zweiteilige Ausgestaltung der Lagereinheit können das wenigstens eine Fixierelement und das wenigstens eine Hohlrad sich voneinander unterscheidende Materialien aufweisen. Je nach Anforderung an das jeweilige Bauteil kann somit das optimale Material verwendet werden. Vorzugsweise weist das Fixierelement ein erstes Material, insbesondere Kunststoff, und das wenigstens eine Hohlrad ein zweites Material, insbesondere Metall, auf. Zusätzlich oder alternativ weist das wenigstens eine Hohlrad ein Sintermetall, insbesondere Aluminium, auf. Zusätzlich oder alternativ ist das wenigstens eine Hohlrad als Stanzteil, insbesondere als Feinstanzteil, Feinschneidteil und/oder Präzisionsstanzteil, aus einem Metallblech ausgestanzt.

Vorteilhaft ist es, wenn das wenigstens eine Hohlrad die wenigstens eine Lagerachse und/oder wenigstens einen Aufnahmehohlraum für die wenigstens eine Lagerachse, und/oder das wenigstens eine Fixierelement die wenigstens eine Lagerachse und/oder wenigstens einen Lagerdurchbruch für die wenigstens eine Lagerachse umfasst. So können das wenigstens eine Hohlrad und das wenigstens eine Fixierelement im bestimmungsgemäßen Gebrauch der Lagereinheit mit Hilfe der wenigstens einen Lagerachse, des wenigstens einen Aufnahmehohlraums und/oder des wenigstens einen Lagerdurchbruchs, insbesondere unmittelbar, miteinander verbunden sein.

Des Weiteren ist es Vorteilhaft, wenn im bestimmungsgemäßen Gebrauch der Lagereinheit die wenigstens eine Lagerachse vorzugsweise in dem wenigstens einen Aufnahmehohlraum des wenigstens einen Hohlrads, insbesondere verschiebefest und/oder lösbar, aufgenommen und/oder in dem wenigstens einen Lagerdurchbruch des Fixierelements gelagert ist.

Vorteilhaft ist es zudem, wenn die wenigstens eine Lagerachse als unabhängiger Lagerstift ausgebildet ist und/oder sich entlang einer Axialrichtung des Stellantriebs erstreckt.

Des Weiteren ist es vorteilhaft, wenn die wenigstens eine Lagerachse das wenigstens eine Getriebeelement und/oder wenigstens ein Getriebebauteil des Stellantriebs, insbesondere eines Übersetzungsgetriebes des Stellantriebs, lagert und/oder aufnimmt.

Vorteilhaft ist es zudem, wenn das wenigstens eine Hohlrad wenigstens zwei, vorzugsweise wenigstens drei, Lagerachsen und/oder wenigstens zwei, vorzugsweise wenigstens drei, Aufnahmehohlräume umfasst.

Vorteilhaft ist es, wenn das wenigstens eine Fixierelement wenigstens zwei, vorzugsweise wenigstens drei, Lagerdurchbrüche umfasst.

Auch ist es vorteilhaft, wenn eine erste Lagerachse wenigstens ein Übersetzungsrad und/oder wenigstens ein Übersetzungsritzel, eine zweite Lagerachse wenigstens ein erstes Zwischenritzel und/oder eine dritte Lagerachse wenigstens ein zweites Zwischenritzel lagert und/oder aufnimmt, wobei vorzugsweise die erste Lagerachse, die zweite Lagerachse und/oder die dritte Lagerachse, insbesondere verschiebefest, mit dem wenigstens einen Hohlrad verbunden und/oder an dem wenigstens einen Hohlrad befestigt ist.

Das wenigstens eine Übersetzungsrad und das wenigstens eine Übersetzungsritzel sind vorzugsweise als Doppelgetrieberad ausgebildet und/oder, insbesondere verschiebefest, miteinander verbunden. Das Doppelgetrieberad ist vorzugsweise an der ersten Lagerachse gelagert und/oder aufgenommen.

Das Antriebsritzel ist vorzugsweise am Motor gelagert und dreht sich um eine Antriebsachse. Der Motor ist wiederum mit Hilfe der Lagereinheit fixiert. Das wenigstens eine Hohlrad nimmt vorzugsweise die Getriebeelemente des Planetenradgetriebes auf. Somit ist auch eine Abtriebsachse des Planetenradgetriebes mit Hilfe der Lagereinheit fixiert. Dadurch, dass auch die wenigstens eine Lagerachse, vorzugsweise die erste Lagerachse, die zweite Lagerachse und/oder die dritte Lagerachse, mit Hilfe des wenigstens einen Hohlrads und somit mit Hilfe der Lagereinheit bestimmt bzw. fixiert ist, können die jeweiligen Abstände der Getriebeelemente des Planetenradgetriebes und des Übersetzungsgetriebes zueinander konstant gehalten werden.

Des Weiteren ist es vorteilhaft, wenn das wenigstens eine Hohlrad einen ersten Aufnahmehohlraum für die erste Lagerachse, einen zweiten Aufnahmehohlraum für die zweite Lagerachse und/oder einen dritten Aufnahmehohlraum für die dritte Lagerachse und/oder das Fixierelement einen ersten Lagerdurchbruch für die erste Lagerachse, einen zweiten Lagerdurchbruch für die zweite Lagerachse und/oder einen dritten Lagerdurchbruch für die dritte Lagerachse aufweist.

Auch ist es vorteilhaft, wenn im bestimmungsgemäßen Gebrauch des Stellantriebs das Übersetzungsritzel mit dem ersten Zwischenritzel und/oder dem zweiten Zwischenritzel in Eingriff steht.

Vorteilhaft ist es zudem, wenn die erste Lagerachse zwischen der zweiten Lagerachse und der dritten Lagerachse, der erste Aufnahmehohlraum zwischen dem zweiten Aufnahmehohlraum und dem dritten Aufnahmehohlraum und/oder der erste Lagerdurchbruch zwischen dem zweiten Lagerdurchbruch und dem dritten Lagerdurchbruch angeordnet ist.

Des Weiteren ist es vorteilhaft, wenn der erste Lagerdurchbruch mit der ersten Lagerachse eine Presspassung und/oder eine Übergangspassung ausbildet. Zusätzlich oder alternativ liegt der erste Lagerdurchbruch umlaufend an der ersten Lagerachse an. Dadurch ist im bestimmungsgemäßen Gebrauch der Lagereinheit ein erster Achsabstand zwischen einer Antriebsachse des Motors und einer durch die erste Lagerachse führende Übersetzungsachse und/oder ein zweiter Achsabstand zwischen der Übersetzungsachse und einer Abtriebsachse des Planetenradgetriebes konstant und/oder unveränderbar ausgebildet.

Vorteile bringt es zudem mit sich, wenn zwischen wenigstens einem der Lagerdurchbrüche und wenigstens einer der Lagerachsen wenigstens ein Ausgleichsspiel ausgebildet ist, so dass im bestimmungsgemäßen Gebrauch des Stellantriebs das wenigstes eine Fixierelement zum wenigstens einen Hohlrad, insbesondere begrenzt, bewegbar ist.

Vorzugsweise umfasst das Ausgleichsspiel einen Abstand zwischen wenigstens einem der Lagerdurchbrüche und wenigstens einer der Lagerachsen. Mittels des Abstands kann sehr einfach die begrenzte Bewegbarkeit des wenigstens einen Fixierelements zu der wenigstens einen Lagerachse sichergestellt werden. Zusätzlich oder alternativ ist es vorstellbar, dass zumindest teilweise innerhalb des Ausgleichsspiels bzw. im Bereich des Abstands wenigstens ein Ausgleichselement angeordnet ist, das zumindest teilweise verformbar ausgebildet ist. Beispielsweise ist das Ausgleichselement aus einem formbaren dritten Material, insbesondere aus Schaumstoff, Kunststoff, Klebstoff, Elastomer und/oder Kautschuk, hergestellt.

Vorteilhaft ist es zudem, wenn zwischen dem zweiten Lagerdurchbruch und der zweiten Lagerachse ein erstes Ausgleichsspiel und/oder zwischen dem dritten Lagerdurchbruch und der dritten Lagerachse ein zweites Ausgleichsspiel ausbildet ist, so dass im bestimmungsgemäßen Gebrauch des Stellantriebs das wenigstes eine Fixierelement zum wenigstens einen Hohlrad, insbesondere um die erste Lagerachse und/oder um die Übersetzungsachse, begrenzt verschwenkbar ist. Da vorzugsweise die erste Lagerachse an dem ersten Lagerdurchbruch anliegt, ist um die erste Lagerachse lediglich eine Drehbewegung bzw. die Schwenkbewegung realisierbar. So kann gewährleistet werden, dass die an der zweiten Lagerachse und/oder dritten Lagerachse angeordneten Zwischenritzel lediglich begrenzt verschwenkt werden. So können beispielsweise Kräfte und/oder Momente, die durch den Motor und/oder die Abtriebsachse auf eines der Getriebeelemente und/oder die Lagereinheit eingebracht werden, lediglich durch die begrenzte Schwenkbewegung kompensiert werden. Das begrenzte Verschwenken gleicht somit die einwirkenden Kräfte und/oder Momente aus. Beim Verschwenken können zudem die beiden Zwischenritzel unterschiedlich stark gegen das wenigstens eine Abtriebsrad gedrückt werden. Aufgrund der Leistungsverzweigung auf diese zwei Zwischenritzel ist stets der Eingriff zwischen wenigstens einem der zwei Zwischenritzel und dem Abtriebsrad gewährleistet.

Ebenso bringt es Vorteile mit sich, wenn der wenigstens eine Aufnahmehohlraum des wenigstens einen Hohlrads wenigstens eine Aufnahmeöffnung aufweist und/oder der wenigstens eine Aufnahmehohlraum mit zwei entlang der Axialrichtung des Stellantriebs voneinander beabstandeten Aufnahmeöffnungen als Aufnahmedurchbruch ausgebildet ist.

Vorteilhaft ist es zudem, wenn die wenigstens eine Lagerachse einen Aufnahmeabschnitt und/oder einen Lagerabschnitt umfasst, wobei der Aufnahmeabschnitt im bestimmungsgemäßen Gebrauch der Lagereinheit vorzugsweise zumindest teilweise in dem Aufnahmehohlraum des wenigstens einen Hohlrads und/oder in dem Lagerdurchbruch des Fixierelements aufgenommen und/oder angeordnet ist und/oder das wenigstens eine Getriebeelement und/oder Getriebebauteil des Stellantriebs, insbesondere des Übersetzungsgetriebes des Stellantriebs, an dem Lagerabschnitt gelagert und/oder aufgenommen ist. Vorzugsweise ist die wenigstens eine Lagerachse, insbesondere die erste Lagerachse, die zweite Lagerachse und/oder die dritte Lagerachse, beispielsweise ausschließlich, einseitig an dem wenigstens einen Hohlrad gelagert und/oder befestigt. So können Toleranzen anderer umliegender Bauteile vernachlässigt werden. Durch die Lagerung bzw. Befestigung der wenigstens einen Lagerachse an nur einem Bauteil bzw. Baueinheit, also dem wenigstens einen Hohlrad und/oder der Hohlradeinheit, kann die Einhaltung der Achsabstände zwischen den Getriebeelementen sichergestellt werden.

Zudem ist es vorteilhaft, wenn sich der Aufnahmeabschnitt über wenigstens ein Drittel, vorzugsweise wenigstens die Hälfte, einer entlang der Axialrichtung erstreckenden Gesamtlänge der Lagerachse erstreckt.

Auch ist es von Vorteil, wenn sich der Aufnahmeabschnitt zusammen mit dem Lagerabschnitt über wenigstens die Hälfte, vorzugsweise wenigstens zwei Drittel, der entlang der Axialrichtung erstreckenden Gesamtlänge der Lagerachse erstreckt.

Des Weiteren ist es vorteilhaft, wenn die wenigstens eine Lagerachse ein an den Lagerabschnitt angrenzendes erstes Ende und/oder ein an den Aufnahmeabschnitt angrenzendes zweites Ende umfasst.

Ebenso ist es vorteilhaft, wenn das zweite Ende der wenigstens einen Lagerachse innerhalb des Aufnahmehohlraums angeordnet ist und/oder dass das wenigstens eine Hohlrad die wenigstens eine Lagerachse entgegen der Axialrichtung zumindest teilweise überragt. Die Axialrichtung erstreckt sich dabei von einem Gehäuseunterteil zu einem Gehäusedeckel des Stellantriebs bzw. von dem wenigstens einen Hohlrad zu dem wenigstens einen Abtriebsrad des Planetenradgetriebes. Auch steht die wenigstens eine Lagerachse in Axialrichtung von dem wenigstens einen Hohlrad ab.

Auch ist es von Vorteil, wenn das erste Ende der wenigstens einen Lagerachse innerhalb des wenigstens einen Getriebeelements angeordnet ist und/oder das Getriebeelement in Axialrichtung der wenigstens einen Lagerachse zumindest teilweise überragt.

Des Weiteren wird ein Stellantrieb, insbesondere für eine Fahrzeugkomponente, beispielsweise für eine elektronische Parkbremse, vorgeschlagen. Der Stellantrieb umfasst wenigstens ein Gehäuse, einen im Gehäuse angeordneten Motor, wenigstens ein im Gehäuse angeordnetes und mit dem Motor gekoppeltes Planetenradgetriebe und/oder Übersetzungsgetriebe, und wenigstens eine Lagereinheit für den Motor und wenigstens einem Getriebeelement des Planetenradgetriebes und/oder Übersetzungsgetriebes.

Erfindungsgemäß ist die wenigstens eine Lagereinheit gemäß der vorangegangenen Beschreibung ausgebildet, wobei die genannten Merkmale einzeln oder in beliebiger Kombination vorhanden sein können.

Vorteilhaft ist es, wenn ein erstes Ende und/oder ein zweites Ende der wenigstens einen Lagerachse im bestimmungsgemäßen Gebrauch der Lagereinheit und/oder des Stellantriebs von dem Gehäuse, insbesondere von einem Gehäuseunterteil und/oder einem Gehäusedeckel, des Stellantriebs beabstandet ist.

Die wenigstens eine Lagerachse ist vorzugsweise ausschließlich in der Lagereinheit gelagert und/oder aufgenommen. Vorzugsweise ist die wenigstens eine Lagerachse, insbesondere die erste Lagerachse, die zweite Lagerachse und/oder die dritte Lagerachse, ausschließlich einseitig an der Lagereinheit gelagert und/oder aufgenommen. Zum Aufnehmen in der Lagereinheit kann die wenigstens eine Lagerachse einen Aufnahmeabschnitt umfassen.

Auch ist es von Vorteil, wenn das wenigstens ein Getriebeelement und/oder das wenigstens eine Hohlrad als Stanzteil insbesondere als Feinstanzteil, Feinschneidteil und/oder Präzisionsstanzteil, ausgebildet ist. Das Feinstanzen bzw. Feinschneiden ist ein spanloses Trennverfahren, bei dem hochpräzise Werkstücke, im vorliegenden Fall das Getriebeelement, gefertigt werden können. Zusätzlich oder alternativ kann das Getriebeelement gleichzeitig umgeformt werden. Im Gegensatz zum "normalen" Stanzen wird das wenigstens eine Getriebeelement beim Stanzen und/oder Umformen durch Feinstanzen, Feinschneiden und/oder Präzisionsstanzen an der Schnittkontur, insbesondere wenigstens einer Außenkontur und/oder Innenkontur, vorzugsweise mit einer Ringzacke festgehalten. Anschließend an das Festhalten schneidet ein Stempel das wenigstens eine Getriebeelement aus dem Metall aus. Dadurch kann das wenigstens eine Getriebeelement mit der wenigstens einen sehr präzisen Schnittkante, insbesondere an der Außenkontur und/oder Innenkontur, hergestellt bzw. ausgestanzt werden. Zusätzlich oder alternativ weist das wenigstens eine präzisionsgestanzte, feingeschnittene und/oder feingestanzte Getriebeelement einen hohen zylindrischen Schnittanteil entlang der Blechdicke auf. Diese präzisen Schnitte bzw. Schnittkante kann insbesondere bei den erfindungsgemäßen Getriebeelementen, vorzugsweise im Bereich der wenigstens einen Verzahnung, vorteilhaft sein.

Vorzugsweise ist das wenigstens eine Hohlrad, das Antriebsritzel, das Übersetzungsrad, das Übersetzungsritzel, das Zwischenritzel, das Abtriebsrad, das Sonnenrad, der Planetenträger und/oder das Planetenrad als Stanzteil, insbesondere als Feinstanzteil, Feinschneidteil und/oder Präzisionsstanzteil, ausgebildet.

Weitere Vorteile der Erfindung sind in den nachfolgenden Ausführungsbeispielen beschrieben. Es zeigen:
- **Figur 1**: eine schematische Schnittdarstellung eines Stellantriebs gemäß einem Ausführungsbeispiel, und
- **Figur 2**: eine schematische Perspektive einer Lagereinheit gemäß einem Ausführungsbeispiel.

Bei der nachfolgenden Beschreibung der Figuren werden für in den verschiedenen Figuren jeweils identische und/oder zumindest vergleichbare Merkmale gleiche Bezugszeichen verwendet. Die einzelnen Merkmale, deren Ausgestaltung und/oder Wirkweise werden meist nur bei ihrer ersten Erwähnung ausführlich erläutert. Werden einzelne Merkmale nicht nochmals detailliert erläutert, so entspricht deren Ausgestaltung und/oder Wirkweise der Ausgestaltung und Wirkweise der bereits beschriebenen gleichwirkenden oder gleichnamigen Merkmale.

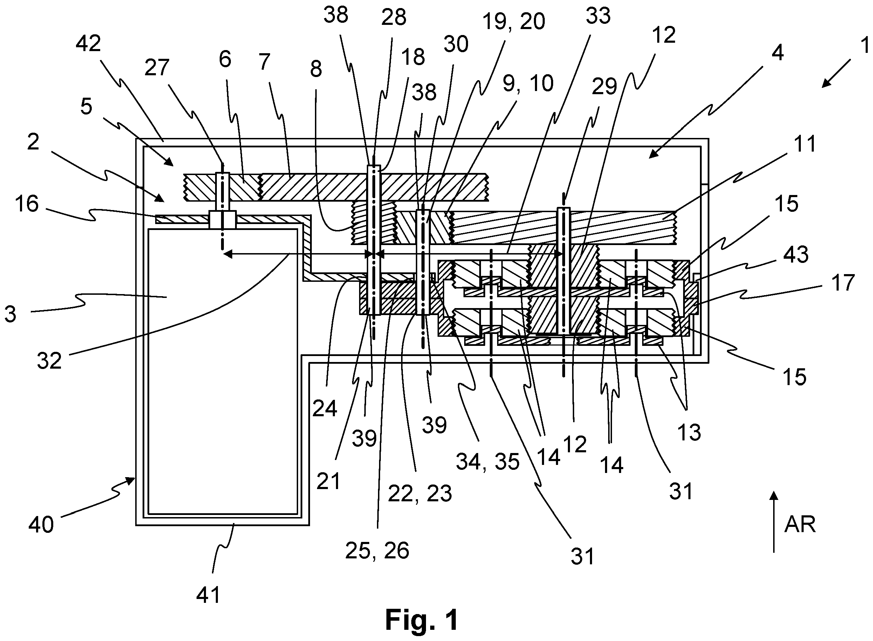

Figur 1 zeigt eine schematische Schnittdarstellung eines Stellantriebs 1 gemäß einem Ausführungsbeispiel. Der Stellantrieb 1 umfasst im gezeigten Ausführungsbeispiel ein Planetenradgetriebe 4, welches beispielhaft als mehrstufiges, insbesondere zweistufiges, Planetenradgetriebe 4 ausgebildet ist. Das Planetenradgetriebe 4 wird mit Hilfe eines Motors 3 angetrieben bzw. in eine Drehbewegung versetzt. Die Drehbewegung des Motors 3 wird mit Hilfe wenigstens eines als Getriebeelemente 6, 7, 8, 9, 10, 11, 12, 13, 14, 15 ausgebildeten Getrieberads bzw. Stirnrads auf das Planetenradgetriebe 4 übertragen und/oder übersetzt. Hierfür weist der Stellantrieb 1 im gezeigten Ausführungsbeispiel ein aus mehreren Getriebeelementen 6, 7, 8, 9, 10, 11, 12, 13, 14, 15 gebildetes Übersetzungsgetriebe 5 auf.

Der Stellantrieb 1 weist mehrere Getriebeelemente 6, 7, 8, 9, 10, 11, 12, 13, 14, 15 auf, wobei wenigstens eines der Getriebeelemente 6, 7, 8, 9, 10, 11, 12, 13, 14, 15, insbesondere mehrere der Getriebeelemente 6, 7, 8, 9, 10, 11, 12, 13, 14, 15, eine Verzahnung umfasst. Mit Hilfe der Verzahnungen stehen die mehreren Getriebeelemente 6, 7, 8, 9, 10, 11, 12, 13, 14, 15 miteinander in Eingriff.

Im gezeigten Ausführungsbeispiel sind eine Vielzahl an Getriebeelemente 6, 7, 8, 9, 10, 11, 12, 13, 14, 15 dargestellt. So ist wenigstens ein Antriebsritzel 6, wenigstens ein Übersetzungsrad 7, wenigstens ein Übersetzungsritzel 8, wenigstens ein Zwischenritzel 9, 10, wenigstens ein Abtriebsrad 11, wenigstens ein Sonnenrad 12, wenigstens ein Planetenträger 13, wenigstens ein Planetenrad 14 und/oder wenigstens ein Hohlrad 15 als das wenigstens eine Getriebeelement 6, 7, 8, 9, 10, 11, 12, 13, 14, 15 dargestellt. Vorzugsweise stehen die vorstehend genannten Getriebeelemente 6, 7, 8, 9, 10, 11, 12, 13, 14, 15 miteinander, insbesondere in der genannten Reihenfolge, in Eingriff. Vorzugweise bilden das wenigstens eine Übersetzungsrad 7, das wenigstens eine Übersetzungsritzel 8 und/oder das wenigstens eine Zwischenritzel 9, 10 das Übersetzungsgetriebe 5 aus. Hierdurch kann das durch den Motor 3 eingebrachte Drehmoment bzw. die Drehbewegung von einer Antriebsachse 27 zu einer Abtriebsachse 29 übertragen und/oder übersetzt werden.

Vorzugsweise weist das Übersetzungsgetriebe 5 ein erstes Zwischenritzel 9 und ein zweites Zwischenritzel 10 auf. Dadurch kann die Last, die vom dem wenigstens einen Übersetzungsritzel 8 zu dem wenigstens einen Abtriebsrad 11 über die zwei Zwischenritzel 9, 10 übertragen wird, verzweigt und/oder geteilt werden. So kann die Ausfallwahrscheinlichkeit des wenigstens einen Zwischenritzels 9, 10 reduziert werden. Im gezeigten Ausführungsbeispiel ist lediglich eines der Zwischenritzel 9, 10 gezeigt. Vorzugsweise sind das erste Zwischenritzel 9 und das zweite Zwischenritzel 10 derart hintereinander angeordnet, dass im gezeigten Ausführungsbeispiel lediglich eines der beiden Zwischenritzel 9, 10 dargestellt ist.

Zudem ist im Ausführungsbeispiel der Figur 1 das Planetenradgetriebe 4 dargestellt. Das Planetenradgetriebe 4 umfasst das wenigstens eine Hohlrad 15, den wenigstens einen Planetenträger 13, das wenigstens eine Planetenrad 14, das wenigstens eine Sonnenrad 12 und/oder das wenigstens eine Abtriebsrad 11. Da das Planetenradgetriebe 4 als mehrstufiges, insbesondere zweistufiges Planetenradgetriebe 4 ausgebildet ist, umfasst dieses wenigstens zwei Planetenträger 13, wenigstens zwei Planetenräder 14 und wenigstens zwei Sonnenräder 12. Zusätzlich umfasst das Planetenradgetriebe 4 im gezeigten Ausführungsbeispiel zwei Hohlräder 15.

Vorzugsweise ist wenigstens eines der Getriebeelemente 6, 7, 8, 9, 10, 11, 12, 13, 14, 15, insbesondere das wenigstens eine Antriebsritzel 6, das wenigstens eine Übersetzungsrad 7, das wenigstens eine Übersetzungsritzel 8, das wenigstens eine Abtriebsrad 11, das wenigstens eine Sonnenrad 12, der wenigstens eine Planetenträger 13, das wenigstens eine Planetenrad 14 und/oder das wenigstens eine Hohlrad 15, als Stanzteil, insbesondere als Feinstanzteil, Feinschneidteil und/oder Präzisionsstanzteil, ausgebildet. Das als Stanzteil ausgebildete Getriebeelement 6, 7, 8, 9, 10, 11, 12, 13, 14, 15 wird aus einem Metallblech ausgestanzt. Das Ausstanzen erfolgt meist durch Feinstanzen, Feinschneiden und/oder Präzisionsstanzen. Hierfür wird beispielsweise eine dreifach wirkende Presse verwendet. So können möglichst exakte und/oder drehmomentresistente Getriebeelemente 6, 7, 8, 9, 10, 11, 12, 13, 14, 15 realisiert werden. Zusätzlich kann das als Stanzteil ausgebildete Getriebeelement 6, 7, 8, 9, 10, 11, 12, 13, 14, 15 im Anschluss an das Ausstanzen umgeformt werden.

Im gezeigten Ausführungsbeispiel sind das wenigstens eine Hohlrad 15, der wenigstens eine Planetenträger 13, das wenigstens eine Planetenrad 14, das wenigstens eine Abtriebsrad 11 und/oder das wenigstens eine Sonnenrad 12 beispielsweise als Stanzteil, insbesondere als Feinstanzteil, Feinschneidteil und/oder Präzisionsstanzteil, ausgebildet. So bilden zwei als Stanzteil ausgebildete Hohlräder 15 im gezeigten Ausführungsbeispiel eine Hohlradeinheit für das mehrstufige Planetenradgetriebe 4 aus.

Zudem umfasst der wenigstens eine Planetenträger 13 im gezeigten Ausführungsbeispiel wenigstens einen Lagerabschnitt für das wenigstens eine Planetenrad 14. Mit Hilfe des wenigstens einen Lagerabschnitts kann wenigstens ein Planetenrad 14, vorzugsweise mehrere, beispielsweise drei oder fünf, Planetenräder 14, durch den wenigstens einen Planetenträger 13 aufgenommen und/oder drehbar um eine Planetenradachse 31 gelagert werden. Der wenigstens eine Planetenträger 13 bildet mit dem wenigstens einen Planetenrad 14 eine Planeteneinheit aus.

Zusätzlich oder alternativ weist das Übersetzungsgetriebe 5 und/oder das Planetenradgetriebe 4 wenigstens ein Doppelgetrieberad auf. Im gezeigten Ausführungsbeispiel umfasst das wenigstens eine Doppelgetrieberad das wenigstens eine Übersetzungsritzel 8 und das wenigstens eine Übersetzungsrad 7 oder das wenigstens eine Sonnenrad 12 und das wenigstens eine Abtriebsrad 11. Die jeweils zwei Getriebeelemente 6, 7, 8, 9, 10, 11, 12, 13, 14, 15 können auch hier als Stanzteile ausgebildet sein, wobei diese im Anschluss an das Ausstanzen und/oder Umformen aneinander angelegt und/oder miteinander verbunden werden.

Das wenigstens eine Hohlrad 15 und/oder die Hohlradeinheit des Planetenradgetriebes 4 ist im gezeigten Ausführungsbeispiel verschiebefest in einem Gehäuse 40 des Stellantriebs 1 aufgenommen. Hierfür umfasst das wenigstens eine Hohlrad 15 und/oder die Hohlradeinheit wenigstens einen Sicherungsabschnitt 17. Der Sicherungsabschnitt 17 ist derart korrespondierend zu einem Stützabschnitt 43 des Gehäuses 40 ausgebildet, dass diese im bestimmungsgemäßen Gebrauch des Planetenradgetriebes 4 und/oder des Stellantriebs 1 aneinander anliegen. So kann das wenigstens eine Hohlrad 15 in dem Gehäuse 40, insbesondere lösbar, fixiert und/oder drehfest gelagert werden.

Wird nun mit Hilfe des Motors 3 eine Drehbewegung erzeugt bzw. eingebracht, so dreht sich das wenigstens eine Antriebsritzel 6 um die Antriebsachse 27, das wenigstens eine Übersetzungsrad 7 um eine Übersetzungsachse 28, das wenigstens eine Übersetzungsritzel 8 um die Übersetzungsachse 28, das wenigstens eine Zwischenritzel 9, 10 um wenigstens eine Zwischenritzelachse 30, das wenigstens eine Abtriebsrad 11 um die Abtriebsachse 29 und/oder das wenigstens eine Planetenrad 14 um die wenigstens die Planetenradachse 31.

Wie vorstehend bereits beschrieben, ist das Planetenradgetriebe 4 im gezeigten Ausführungsbeispiel als mehrstufiges, insbesondere zweistufiges Planetenradgetriebe 4, ausgebildet. Somit umfasst das Planetenradgetriebe 4 die wenigstens zwei Planeteneinheiten, die wenigstens zwei Hohlräder 15 und/oder die wenigstens eine Hohlradeinheit. Im bestimmungsgemäßen Gebrauch des Stellantriebs 1 greifen die Verzahnungen zweier entlang einer Axialrichtung AR des Stellantriebs 1 voneinander beabstandeten Planetenräder 14 in die Verzahnungen der jeweiligen Hohlräder 15 und/oder der Hohlradeinheit ein. Dadurch, dass die Verzahnung der Hohlräder 15 und/oder der Hohlradeinheit voneinander beabstandet sind bzw. der Abstand zwischen den Verzahnungen als Hohlraum ausgebildet ist, kann eine Gewichtsreduzierung des Planetenradgetriebes 4 erzielt werden.

Der Stellantrieb 1 umfasst eine Lagereinheit 2, die im bestimmungsgemäßen Gebrauch des Stellantriebs 1 den Motor 3 und wenigstens ein Getriebeelement 6, 7, 8, 9, 10, 11, 12, 13, 14, 15 des Stellantriebs 1 lagert. Die Lagereinheit 2 umfasst wenigstens ein Fixierelement 16 und das wenigstens eine Hohlrad 15. Mit Hilfe des wenigstens einen Fixierelements 16 kann der Motor 3 in dem Gehäuse 40 des Stellantriebs 1 fixierbar und/oder lagerbar sein. Hierfür kann das wenigstens eine Fixierelement 16 den Motor 3 beispielsweise im Bereich des Antriebsritzels 6 aufnehmen. Das wenigstens eine Hohlrad 15 nimmt vorzugsweise das wenigstens eine Getriebeelement 6, 7, 8, 9, 10, 11, 12, 13, 14, 15 des Stellantriebs 1 auf. Mit Hilfe des Fixierelements 16 kann der Motor 3 zum Übersetzungsgetriebe 5 und/oder zum Planetenradgetriebe 4 fixiert werden. So können die Abstände der einzelnen Stirnräder zueinander konstant gehalten werden. Dadurch kann der Verschleiß an den Stirnrädern reduziert werden.

Die Lagereinheit 2 umfasst zudem wenigstens eine Lagerachse 18, 19, 20, wobei das wenigstens eine Hohlrad 15 und das wenigstens eine Fixierelement 16 im bestimmungsgemäßen Gebrauch der Lagereinheit 2 über die wenigstens eine Lagerachse 18, 19, 20, insbesondere unmittelbar, verbunden sind. Vorzugsweise ist die wenigstens eine Lagerachse 18, 19, 20 als unabhängiger Lagerstift ausgebildet. Zusätzlich oder alternativ kann das wenigstens eine Hohlrad 15 und/oder das wenigstens eine Fixierelement 16 die wenigstens eine Lagerachse 18, 19, 20 umfassen. Mit Hilfe der wenigstens einen Lagerachse 18, 19, 20 können zusätzlich oder alternativ die zwei als Stanzteile ausgebildeten Hohlräder 15 miteinander verbunden und/oder zueinander fixiert werden.

Vorzugsweise weist das wenigstens eine Hohlrad 15 die wenigstens eine Lagerachse 18, 19, 20 und/oder wenigstens einen Aufnahmehohlraum 21, 22, 23 für die wenigstens eine Lagerachse 18, 19, 20 auf. Im gezeigten Ausführungsbeispiel umfasst das wenigstens einen Hohlrad 15 den wenigstens einen Aufnahmehohlraum 21, 22, 23, in den die wenigstens eine Lagerachse 18, 19, 20 einschiebbar und/oder aufnehmbar ist. Im bestimmungsgemäßen Gebrauch der Lagereinheit 2 ist die wenigstens eine Lagerachse 18, 19, 20 in dem wenigstens einen Aufnahmehohlraum 21, 22, 23, insbesondere verschiebefest und/oder lösbar, aufgenommen

Zusätzlich oder alternativ weist das wenigstens eine Fixierelement 16 vorzugsweise die wenigstens eine Lagerachse 18, 19, 20 und/oder wenigstens einen Lagerdurchbruch 24, 25, 26 für die wenigstens eine Lagerachse 18, 19, 20 auf. Im gezeigten Ausführungsbeispiel umfasst das wenigstens einen Fixierelement 16 den wenigstens einen Lagerdurchbruch 24, 25, 26, durch den die wenigstens eine Lagerachse 18, 19, 20 hindurchragt. Im bestimmungsgemäßen Gebrauch der Lagereinheit 2 ist die wenigstens eine Lagerachse 18, 19, 20 in dem wenigstens einen Lagerdurchbruch 24, 25, 26, insbesondere quer zur Axialrichtung AR, gelagert. Im Bereich der wenigstens einen Lagerachse 18, 19, 20 liegen das wenigstens eine Hohlrad 15 und das wenigstens eine Fixierelement 16 vorzugsweise entlang der Axialrichtung AR aneinander an. Die wenigstens eine Lagerachse 18,19, 20 kann zudem, insbesondere entlang der Axialrichtung AR, beispielsweise durch das Gehäuse 40, begrenzt und/oder gesichert werden, so dass sich diese im bestimmungsgemäßen Gebrauch des Stellantriebs 1 nicht unbeabsichtigt voneinander trennen.

Mit Hilfe der wenigstens einen Lagerachse 18, 19, 20 kann das wenigstens eine Getriebeelement 6, 7, 8, 9, 10, 11, 12, 13, 14, 15, insbesondere das wenigstens eine Übersetzungsrad 7, das wenigstens eine Übersetzungsritzel 8 und/oder das wenigstens eine Zwischenritzel 9, 10 aufgenommen und/oder gelagert werden. Im gezeigten Ausführungsbeispiel nimmt eine erste Lagerachse 18 das wenigstens eine Übersetzungsrad 7 und/oder das wenigstens eine Übersetzungsritzel 8 auf. Zusätzlich oder alternativ nimmt eine zweite Lagerachse 19 das wenigstens eine erste Zwischenritzel 9 und/oder eine dritte Lagerachse 20 das wenigstens eine zweite Zwischenritzel 10 auf.

Vorzugsweise ist die erste Lagerachse 18, die zweite Lagerachse 19 und/oder die dritte Lagerachse 20, insbesondere verschiebefest, mit dem wenigstens einen Hohlrad 15, vorzugsweise mit zwei Hohlrädern 15, verbunden. So umfasst das wenigstens eine Hohlrad 15, vorzugsweise die zwei Hohlräder 15, einen ersten Aufnahmehohlraum 21 für die erste Lagerachse 18, einen zweiten Aufnahmehohlraum 22 für die zweite Lagerachse 19 und/oder einen dritten Aufnahmehohlraum 23 für die dritte Lagerachse 20. Zusätzlich oder alternativ umfasst das wenigstens eine Fixierelement 16 einen ersten Lagerdurchbruch 24 für die erste Lagerachse 18, einen zweiten Lagerdurchbruch 25 für die zweite Lagerachse 19 und/oder einen dritten Lagerdurchbruch 26 für die dritte Lagerachse 20. So können das wenigstens eine Hohlrad 15 und das wenigstens eine Fixierelement 16 über wenigstens drei Lagerachse 18, 19, 20 miteinander verbunden sein.

Vorzugsweise bildet der erste Lagerdurchbruch 24 mit der ersten Lagerachse 18 eine Presspassung und/oder eine Übergangspassung aus. So liegt der erste Lagerdurchbruch 24 umlaufend an der ersten Lagerachse 18 an. Dadurch kann im bestimmungsgemäßen Gebrauch der Lagereinheit 2 ein erster Achsabstand 32 zwischen der Antriebsachse 27 und der Übersetzungsachse 28 und/oder ein zweiter Achsabstand 33 zwischen der Übersetzungsachse 28 und der Abtriebsachse 29 konstant und/oder unveränderbar ausgebildet sein.

Zwischen wenigstens einem der Lagerdurchbrüche 24, 25, 26 und der wenigstens einen Lagerachse 18, 19, 20 ist vorzugsweise wenigstens ein Ausgleichsspiel 34, 35 ausgebildet bzw. angeordnet. Dadurch kann sich im bestimmungsgemäßen Gebrauch des Stellantriebs 1 das wenigstes eine Fixierelement 16 zum wenigstens einen Hohlrad 15, insbesondere begrenzt, bewegen. Das wenigstens eine Ausgleichsspiel 34, 35 kann beispielsweise als Ausgleichselement und/oder, wie im gezeigten Ausführungsbeispiel der Figur 1 dargestellt, als ein Abstand ausgebildet sein. Die wenigstens eine Lagerachse 18, 19, 20 kann sich innerhalb des, insbesondere als Abstand ausgebildeten, Ausgleichsspiels 34, 35, bewegen.

Die wenigstens eine Lagerachse 18, 19, 20 weist vorzugsweise jeweils wenigstens zwei Enden, ein erstes Ende 38 und ein zweites Ende 39, auf. Das erste Ende 38 ist im bestimmungsgemäßen Gebrauch des Stellantriebs 1 zu einem Gehäusedeckel 42 des Gehäuses 40 gerichtet. Das zweite Ende 39 ist im bestimmungsgemäßen Gebrauch des Stellantriebs 1 zu einem Gehäuseunterteil 41 des Gehäuses 40 gerichtet. Vorzugsweise ist das zweite Ende 39 der wenigstens einen Lagerachse 18, 19, 20 innerhalb des wenigstens einen Aufnahmehohlraums 21, 22, 23 angeordnet und/oder das wenigstens eine Hohlrad 15 überragt die wenigstens eine Lagerachse 18, 19, 20 zumindest teilweise entgegen der Axialrichtung AR. Das erste Ende 38 ist hingegen vorzugsweise innerhalb des wenigstens einen Getriebeelements 6, 7, 8, 9, 10, 11, 12, 13, 14, 15, angeordnet und/oder das wenigstens eine Getriebeelement 6, 7, 8, 9, 10, 11, 12, 13, 14, 15 überragt die wenigstens ein Lagerachse 18, 19, 20 zumindest teilweise entlang der Axialrichtung AR.

Vorzugsweise ist die wenigstens eine Lagerachse 18, 19, 20, vorzugsweise die erste Lagerachse 18, die zweite Lagerachse 19 und/oder die dritte Lagerachse 20, insbesondere entlang der Axialrichtung AR, von dem wenigstens einen Gehäuse 40 des Stellantriebs 1 beabstandet. So ist die wenigstens eine Lagerachse 18, 19, 20, vorzugsweise die erste Lagerachse 18, die zweite Lagerachse 19 und/oder die dritte Lagerachse 20, lediglich einseitig, insbesondere ausschließlich in der Lagereinheit 2 und/oder mittels der Lagereinheit 2 gelagert. So können Verkettungen von Toleranzen durch das Gehäuse 40 vermieden werden.

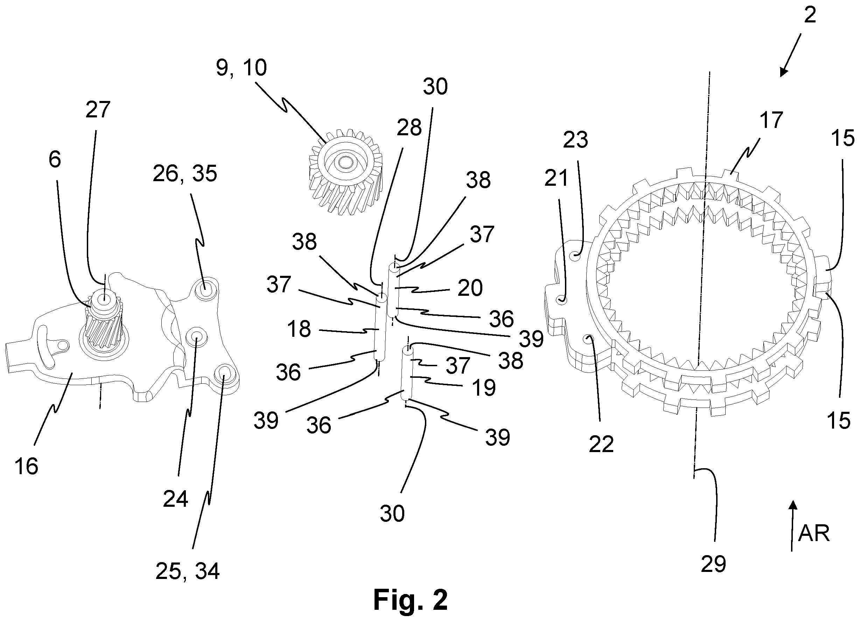

Figur 2 zeigt eine schematische Perspektive einer Lagereinheit 2 gemäß einem Ausführungsbeispiel. Die Lagereinheit 2 ist hierbei als Explosionszeichnung dargestellt, damit die einzelnen Bauteile bzw. Elemente besser sichtbar sind. So sind hier das wenigstens eine Fixierelement 16, die wenigstens eine Lagerachse 18, 19, 20 und/oder das wenigstens eine Hohlrad 15 voneinander beabstandet dargestellt. Zudem ist in dem Ausführungsbeispiel der Figur 2 beispielhaft das wenigstens eine Zwischenritzel 9, 10 dargestellt. Die Lagereinheit 2 ist ähnlich zu der Lagereinheit 2 in dem Stellantrieb 1 der Figur 1 ausgebildet.

Wie im Ausführungsbeispiel der Figur 2 zu erkennen, ist der dritte Lagerdurchbruch 26 und/oder der zweite Lagerdurchbruch 25 beispielhaft als länglicher Durchbruch ausgebildet. Durch diese Ausgestaltung kann beispielsweise zwischen dem zweiten Lagerdurchbruch 25 und der zweiten Lagerachse 19 ein erstes Ausgleichsspiel 34 und/oder zwischen dem dritten Lagerdurchbruch 26 und der dritten Lagerachse 20 ein zweites Ausgleichsspiel 35 ausbildet sein. Durch diesen länglichen Durchbruch kann somit der Abstand zum Bewegen des wenigstens einen Fixierelements 16 relativ zum wenigstens einen Hohlrad 15 gewährleistet werden. Die zwei Ausgleichsspiele 34, 35 sind hierbei jedoch stark überzeichnet dargestellt. Ebenfalls ist es möglich, dass das wenigstens eine Ausgleichsspiel 34, 35 durch eine Spielpassung und/oder Übergangspassung der wenigstens einen Lagerachse 18, 19, 20 zu dem wenigstens einen Lagerdurchbruch 24, 25, 26 bereitgestellt werden. Zusätzlich oder alternativ kann das wenigstens eine Ausgleichsspiel 34, 35 ein Ausgleichselement sein. Weist der zweite Lagerdurchbruch 25 und/oder der dritte Lagerdurchbruch 26 das wenigstens eine Ausgleichsspiel 34, 35 auf, so kann im bestimmungsgemäßen Gebrauch des Stellantriebs 1 das wenigstes eine Fixierelement 16 zum wenigstens einen Hohlrad 15, insbesondere um die erste Lagerachse 18 und/oder um die Übersetzungsachse 28, begrenzt verschwenkt werden.

Der Abschnitt der wenigstens einen Lagerachse 18, 19, 20, der im bestimmungsgemä-ßen Gebrauch der Lagereinheit 2 innerhalb des wenigstens einen Aufnahmehohlraums 21, 22, 23 des wenigstens einen Hohlrads 15 aufnehmbar ist und/oder durch den wenigstens einen Lagerdurchbruch 24, 25, 26 hindurchragt, kann auch Aufnahmeabschnitt 36 genannt werden. Der Abschnitt der wenigstens einen Lagerachse 18, 19, 20, der im bestimmungsgemäßen Gebrauch der Lagereinheit 2 das wenigstens eine Getriebeelement 6, 7, 8, 9, 10, 11, 12, 13, 14, 15, insbesondere das wenigstens eine Übersetzungsrad 7, das wenigstens eine Übersetzungsritzel 8 und/oder das wenigstens eine Zwischenritzel 9, 10, aufnimmt, kann auch Lagerabschnitt 37 genannt werden. Zusätzlich oder alternativ kann sich der wenigstens eine Lagerabschnitt 37 von dem Bereich, an dem er durch den wenigstens einen Lagerdurchbruch 24, 25, 26 gelagert ist, bis zu dem zweiten Ende 38 der wenigstens einen Lagerachse 18, 19, 20 erstrecken.

Der Lagerabschnitt 37 grenzt vorzugsweise an das erstes Ende 38 und/oder der Aufnahmeabschnitt 36 an das zweites Ende 39 der wenigstens einen Lagerachse 18, 19, 20 an. So erstreckt sich der Aufnahmeabschnitt 36 über wenigstens ein Drittel, vorzugsweise wenigstens die Hälfte, einer entlang der Axialrichtung AR erstreckenden Gesamtlänge der Lagerachse 18, 19, 20. Zusätzlich oder alternativ erstreckt sich der Aufnahmeabschnitt 36 zusammen mit dem Lagerabschnitt 37 über wenigstens die Hälfte, vorzugsweise wenigstens zwei Drittel, der entlang der Axialrichtung AR erstreckenden Gesamtlänge der Lagerachse 18, 19, 20.

### Bezugszeichenliste

- 1: Stellantrieb
- 2: Lagereinheit
- 3: Motor
- 4: Planetenradgetriebe
- 5: Übersetzungsgetriebe
- 6: Antriebsritzel
- 7: Übersetzungsrad
- 8: Übersetzungsritzel
- 9: erstes Zwischenritzel
- 10: zweites Zwischenritzel
- 11: Abtriebsrad
- 12: Sonnenrad
- 13: Planetenträger
- 14: Planetenrad
- 15: Hohlrad
- 16: Fixierelement
- 17: Sicherungsabschnitt
- 18: erste Lagerachse
- 19: zweite Lagerachse
- 20: dritte Lagerachse
- 21: ersten Aufnahmehohlraum
- 22: zweiten Aufnahmehohlraum
- 23: dritten Aufnahmehohlraum
- 24: ersten Lagerdurchbruch
- 25: zweiten Lagerdurchbruch
- 26: dritten Lagerdurchbruch
- 27: Antriebsachse
- 28: Übersetzungsachse
- 29: Abtriebsachse
- 30: Zwischenritzelachse
- 31: Planetenradachse
- 32: erster Achsabstand
- 33: zweiter Achsabstand
- 34: erstes Ausgleichsspiel
- 35: zweites Ausgleichsspiel
- 36: Aufnahmeabschnitt
- 37: Lagerabschnitt
- 38: erstes Ende
- 39: zweites Ende
- 40: Gehäuse
- 41: Gehäuseunterteil
- 42: Gehäusedeckel
- 43: Stützabschnitt

- AR: Axialrichtung

## Patentansprüche

1. Lagereinheit (2) für einen Motor (3) und wenigstens ein Getriebeelement (6, 7, 8, 9, 10, 11, 12, 13, 14, 15) eines Stellantriebs (1),
mit wenigstens einem Fixierelement (16), mit dem der Motor (3) in einem Gehäuse (40) des Stellantriebs (1) fixierbar und/oder lagerbar ist, und
mit wenigstens einem Hohlrad (15),
wobei das wenigstens eine Hohlrad (15) wenigstens einen Sicherungsabschnitt (17) umfasst, mit dem das Hohlrad (15) in dem Gehäuse (40) fixierbar und/oder drehfest lagerbar ist,
**dadurch gekennzeichnet,**
**dass** die Lagereinheit (2) wenigstens eine Lagerachse (18, 19, 20) umfasst, wobei das wenigstens eine Hohlrad (15) und das wenigstens eine Fixierelement (16) im bestimmungsgemäßen Gebrauch der Lagereinheit (2) über die wenigstens eine Lagerachse (18, 19, 20), insbesondere unmittelbar, verbunden sind.

2. Lagereinheit nach dem vorangegangenen Anspruch, **dadurch gekennzeichnet, dass** das wenigstens eine Hohlrad (15) die wenigstens eine Lagerachse (18, 19, 20) und/oder wenigstens einen Aufnahmehohlraum (21, 22, 23) für die wenigstens eine Lagerachse (18, 19, 20) umfasst und/oder
dass das wenigstens eine Fixierelement (16) die wenigstens eine Lagerachse (18, 19, 20) und/oder wenigstens einen Lagerdurchbruch (24, 25, 26) für die wenigstens eine Lagerachse (18, 19, 20) umfasst,
wobei im bestimmungsgemäßen Gebrauch der Lagereinheit (2) vorzugsweise die wenigstens eine Lagerachse (18, 19, 20) vorzugsweise in dem wenigstens einen Aufnahmehohlraum (21, 22, 23) des wenigstens einen Hohlrads (15), insbesondere verschiebefest und/oder lösbar, aufgenommen und/oder in dem wenigstens einen Lagerdurchbruch (24, 25, 26) des Fixierelements (16) gelagert ist.

3. Lagereinheit nach einem der vorangegangenen Ansprüche, **dadurch gekennzeichnet, dass** die wenigstens eine Lagerachse (18, 19, 20) das wenigstens eine Getriebeelement (6, 7, 8, 9, 10, 11, 12, 13, 14, 15) des Stellantriebs (1), insbesondere eines Übersetzungsgetriebes (5) des Stellantriebs (1), lagert und/oder sich die wenigstens eine Lagerachse (18, 19, 20) entlang einer Axialrichtung (AR) des Stellantriebs (1) erstreckt.

4. Lagereinheit nach einem der vorangegangenen Ansprüche, **dadurch gekennzeichnet, dass** eine erste Lagerachse (18) wenigstens ein Übersetzungsrad (7) und/oder wenigstens ein Übersetzungsritzel (8), eine zweite Lagerachse (19) wenigstens ein erstes Zwischenritzel (9) und/oder eine dritte Lagerachse (20) wenigstens ein zweites Zwischenritzel (10) lagert und/oder aufnimmt.

5. Lagereinheit nach einem der vorangegangenen Ansprüche, **dadurch gekennzeichnet, dass** das wenigstens eine Hohlrad (15) einen ersten Aufnahmehohlraum (21) für die erste Lagerachse (18), einen zweiten Aufnahmehohlraum (22) für die zweite Lagerachse (19) und/oder einen dritten Aufnahmehohlraum (23) für die dritte Lagerachse (20) und/oder
das Fixierelement (16) einen ersten Lagerdurchbruch (24) für die erste Lagerachse (18), einen zweiten Lagerdurchbruch (25) für die zweite Lagerachse (19) und/oder einen dritten Lagerdurchbruch (26) für die dritte Lagerachse (20) aufweist.

6. Lagereinheit nach einem der vorangegangenen Ansprüche, **dadurch gekennzeichnet, dass** der erste Lagerdurchbruch (24) mit der ersten Lagerachse (18) eine Presspassung und/oder eine Übergangspassung ausbildet und/oder der erste Lagerdurchbruch (24) umlaufend an der ersten Lagerachse (18) anliegt, so dass im bestimmungsgemäßen Gebrauch der Lagereinheit (2) ein erster Achsabstand (32) zwischen einer Antriebsachse (27) des Motors (3) und einer durch die erste Lagerachse (18) führende Übersetzungsachse (28) und/oder ein zweiter Achsabstand (33) zwischen der Übersetzungsachse (28) und einer Abtriebsachse (29) des Planetenradgetriebes (4) konstant und/oder unveränderbar ausgebildet ist.

7. Lagereinheit nach einem der vorangegangenen Ansprüche, **dadurch gekennzeichnet, dass** zwischen wenigstens einem der Lagerdurchbrüche (24, 25, 26) und wenigstens einer der Lagerachsen (18, 19, 20) wenigstens ein Ausgleichsspiel (34, 35) ausgebildet ist,
so dass im bestimmungsgemäßen Gebrauch des Stellantriebs (1) das wenigstes eine Fixierelement (16) zum wenigstens einen Hohlrad (15), insbesondere begrenzt, bewegbar ist.

8. Lagereinheit (2) nach einem der vorangegangenen Ansprüche, **dadurch gekennzeichnet, dass** zwischen dem zweiten Lagerdurchbruch (25) und der zweiten Lagerachse (19) ein erstes Ausgleichsspiel (34) und/oder
zwischen dem dritten Lagerdurchbruch (26) und der dritten Lagerachse (20) ein zweites Ausgleichsspiel (35) ausbildet ist,
so dass im bestimmungsgemäßen Gebrauch des Stellantriebs (1) das wenigstes eine Fixierelement (16) zum wenigstens einen Hohlrad (15), insbesondere um die erste Lagerachse (18) und/oder um die Übersetzungsachse (28), begrenzt verschwenkbar ist.

9. Lagereinheit nach einem der vorangegangenen Ansprüche, **dadurch gekennzeichnet, dass** die wenigstens eine Lagerachse (18, 19, 20) einen Aufnahmeabschnitt (36) und/oder einen Lagerabschnitt (37) umfasst,
wobei der Aufnahmeabschnitt (36) im bestimmungsgemäßen Gebrauch der Lagereinheit (2) vorzugsweise zumindest teilweise in dem Aufnahmehohlraum (21, 22, 23) des wenigstens einen Hohlrads (15) und/oder in dem Lagerdurchbruch (24, 25, 26) des Fixierelements (16) aufgenommen und/oder angeordnet ist und/oder
das wenigstens eine Getriebeelement (6, 7, 8, 9, 10, 11, 12, 13, 14, 15) des Stellantriebs (1), insbesondere des Übersetzungsgetriebes (5) des Stellantriebs (1), an dem Lagerabschnitt (37) gelagert und/oder aufgenommen ist.

10. Lagereinheit nach einem der vorangegangenen Ansprüche, **dadurch gekennzeichnet, dass** sich der Aufnahmeabschnitt (36) über wenigstens ein Drittel, vorzugsweise wenigstens die Hälfte, einer entlang der Axialrichtung (AR) erstreckenden Gesamtlänge der Lagerachse (18, 19, 20) und/oder
sich der Aufnahmeabschnitt (36) zusammen mit dem Lagerabschnitt (37) über wenigstens die Hälfte, vorzugsweise wenigstens zwei Drittel, der entlang der Axialrichtung (AR) erstreckenden Gesamtlänge der Lagerachse (18, 19, 20) erstreckt.

11. Lagereinheit nach einem der vorangegangenen Ansprüche, **dadurch gekennzeichnet, dass** die wenigstens eine Lagerachse (18, 19, 20) ein an den Lagerabschnitt (37) angrenzendes erstes Ende (38) und/oder ein an den Aufnahmeabschnitt (36) angrenzendes zweites Ende (39) umfasst.

12. Lagereinheit nach einem der vorangegangenen Ansprüche, **dadurch gekennzeichnet, dass** das zweite Ende (39) der wenigstens einen Lagerachse (18, 19, 20) innerhalb des Aufnahmehohlraums (21,22, 23) angeordnet ist und/oder dass das wenigstens eine Hohlrad (15) die wenigstens eine Lagerachse (18, 19, 20) entgegen der Axialrichtung (AR) zumindest teilweise überragt.

13. Stellantrieb (1), insbesondere für eine Fahrzeugkomponente,
mit wenigstens einem Gehäuse (40),
mit einem im Gehäuse (40) angeordneten Motor (3),
mit einem im Gehäuse (40) angeordneten und mit dem Motor (3) gekoppelten Planetenradgetriebe (4) und/oder Übersetzungsgetriebe (5), und
mit wenigstens einer Lagereinheit (2) für den Motor (3) und wenigstens einem Getriebeelement (6, 7, 8, 9, 10, 11, 12, 13, 14, 15) des Planetenradgetriebes (4) und/oder Übersetzungsgetriebes (5),
**dadurch gekennzeichnet,**
**dass** die wenigstens eine Lagereinheit (2) gemäß einem oder mehreren der vorangegangenen Ansprüche ausgebildet ist.

14. Stellantrieb (1) nach dem vorangegangenen Anspruch, **dadurch gekennzeichnet, dass** ein erstes Ende (38) und/oder ein zweites Ende (39) der wenigstens einen Lagerachse (18, 19, 20) im bestimmungsgemäßen Gebrauch der Lagereinheit (2) von dem Gehäuse (40), insbesondere von einem Gehäuseunterteil (41) und/oder einem Gehäusedeckel (42), des Stellantriebs (1) beabstandet ist.

15. Stellantrieb (1) nach einem der vorangegangenen Ansprüche, **dadurch gekennzeichnet, dass** das wenigstens eine Getriebeelement (6, 7, 8, 9, 10, 11, 12, 13, 14, 15) und/oder das wenigstens eine Hohlrad (15) als Stanzteil insbesondere Feinstanzteil, Feinschneidteil und/oder Präzisionsstanzteil, ausgebildet ist.
